# EUROPEAN PATENT APPLICATION

(11) **EP 4 656 607 A1**
(43) Date of publication of application: **03.12.2025**
(21) Application number: 25180293.0
(22) Date of filing: 02.06.2025
(51) Int. Cl.: C04B 7/153, C04B 18/167, C04B 28/08, C04B 12/00, C04B 28/00

(54) **HARDENING MIXTURE COMPRISING CONCRETE**

(30) Priority: 31.05.2024 FI 20245695
(71) Applicant: EcoUp Oyj, 90100 Oulu (FI)
(72) Inventor: Hirvensalo, Ilari, Mäntsälä (FI)
(74) Representative: Wilenius, Jami Juhani

(57) **Abstract**

The invention concerns a hardenable mixture that can be hardened by mixing with water. The hardenable mixture comprises crushed stone among the aggregates as well as blast-furnace slag and recycled concrete as binders, these binders having been finely ground and representing 8-16% and a maximum of 15% of the mass of the waterless mixture, respectively. The binders also comprise sodium silicate and sodium hydroxide.

## Description

### FIELD OF THE INVENTION

The invention is related to a cement-like mixture that comprises recycled concrete and hardens through contact with water.

### PRIOR ART

One of the main objectives of circular economy is to spare natural resources by utilizing materials efficiently and sustainably. Utilization of wastes, material side streams and demolished materials is key for an effective circular economy.

Cement and cement-based concrete are used in enormous volumes in the construction field. The most commonly used cement variety is called portland cement. It is made of ground portland clinker to which gypsum is added. Cement production requires a lot of energy, therefore accounting for a substantial share of total global carbon dioxide emissions. No appropriate reuse for disused concrete has been discovered as of yet. However, disused concrete is applied, inter alia, as filling material in earthworks for public roads, parking areas and railyards. In new cement production, a very small share of the aggregates - no more than 5 per cent - can be substituted with crushed concrete.

### OBJECT OF THE INVENTION

The object of the invention is a hardenable mixture that allows more extensive use of recycled concrete than before, thereby contributing to solve problems relating to concrete recycling and providing an effective way of utilizing recycled material.

### SHORT DESCRIPTION OF THE INVENTION

The object of the invention is achieved, e.g., with a mixture that hardens through contact with water, such mixture containing as aggregates both finely and coarsely crushed stone, of which at least one fourth is crushed recycled concrete. The binders include at least finely ground blast-furnace slag and finely ground recycled concrete. Additionally, finely ground stone wool or fly ash may be used. Water glass and caustic soda are used as alkaline activators. Sodium carbonate may also be used. The binders, excluding cement if applied, have been ground to a grain size of 0-200 micrometers, preferably to a grain size of 0-150 micrometers, and even more preferably to a grain size of 0-100 micrometers. Additionally, small amounts of cement can be used, such as portland cement or cement products made thereof.

### DETAILED DESCRIPTION OF THE INVENTION

An embodiment of the first aspect of the invention is a hardenable mixture. The hardenable mixture is a geopolymer that comprises one or more aggregates, one or more binders and one or more alkaline activators. The hardenable mixture can be hardened by mixing with water. A hardenable mixture according to the first aspect comprises finely ground stone and coarsely ground stone as aggregates, together representing 70-81.1% of the mass of the waterless hardenable mixture. In an embodiment, coarse stone represents 20-24% of the mass of the waterless hardenable mixture, and fine stone represents 50-57.1% of the mass of the waterless hardenable mixture.

28.5-100% of said aggregates are comprised of crushed recycled concrete; preferably at least 50% of them are comprised of crushed recycled concrete. Recycled concrete, such as demolished concrete, is crushed into a grain size of, e.g., 0-4 mm or 1-4 mm and used as fine stone, or is crushed into a grain size of, e.g., 0-16 mm or 5-11 mm and used as coarse stone. Other aggregates that can be used include riddled sand, crushed rock, broken stone, and other aggregates used in connection with concrete. An advantage of the embodiment is its combination of binders and activators creating a hardenable mixture where various aggregates can flexibly be used.

The hardenable mixture comprises blast-furnace slag among the binders, representing 8-16% of the mass of the waterless mixture. Blast-furnace slag has been ground to a grain size of 0-200 micrometers, preferably to a grain size of 0-150 micrometers, and even more preferably to a grain size of 0-100 micrometers. The grain sizes presented herein can be specified, for example, as the D90 grain size, where at least 90% of the particles fall within the given grain size range. Recycled concrete is also used as binder, representing at least 15% of the mass of the waterless mixture. Recycled concrete has been ground to a grain size of 0-200 micrometers, preferably to a grain size of 0-150 micrometers, and even more preferably to a grain size of 0-100 micrometers.

In an embodiment, the hardenable mixture also comprises recycled stone wool as binder, ground to a grain size of 0-200 micrometers, preferably to a grain size of 0-150 micrometers, and even more preferably to a grain size of 0-100 micrometers. Preferably, said stone wool represents no more than 8% of the mass of the waterless mixture. In an embodiment, the hardenable mixture also comprises fly ash as binder, ground to a grain size of 0-200 micrometers, preferably to a grain size of 0-150 micrometers, and even more preferably to a grain size of 0-100 micrometers. Preferably, said fly ash represents no more than 2% of the mass of the waterless mixture. An embodiment has both fly ash and stone wool as binders, in addition to the aforementioned recycled concrete and blast-furnace slag. In addition to these or in the place of one of them, cement, such as cement containing portland clinker, can also be used as binder in an embodiment. In an embodiment, cement represents a share of no more than 5% of the mass of the waterless mixture. Cement can be used together with blast-furnace slag and recycled concrete, and additionally fly ash or stone wool or both of them can be used, whereby the hardenable mixture has five different binders in total. Preferably, all binders have been ground to a grain size of 0-150 micrometers, and very preferably, they have been ground to a grain size of 0-100 micrometers.

As alkaline activators of the hardenable mixture, water glass, i.e. sodium silicate, and caustic soda, i.e. sodium hydroxide, are used. In an embodiment, the sodium silicate is a 39% sodium silicate solution, and in an embodiment, its mass percentage share of the waterless hardenable mixture is 1.0-1.8% or an equivalent amount of sodium silicate. In an embodiment, the sodium hydroxide is a 50% sodium hydroxide solution, and in an embodiment, its mass percentage share of the waterless hardenable mixture is 2.0-2.8% or an equivalent amount of sodium hydroxide. In an embodiment, soda ash, i.e. sodium carbonate, can also be used in the hardenable mixture. Preferably, sodium carbonate represents a mass percentage share of no more than 5% of the mass of the waterless mixture.

Very finely ground recycled concrete is applied among the binders of the hardenable mixture presented herein. Together with blast-furnace slag and the presented alkaline activators, it creates a hardenable mixture where recycled concrete in a crushed form can be used among the aggregates as well. In such instance, the share of recycled concrete can be increased to be substantially larger than in hardenable mixtures of prior art. Preferably, the share of recycled concrete is at least 40%, more preferably at least 50%, and most preferably at least 60% of the total waterless mass of the hardenable mixture. Conventional aggregates, such as sand and gravel, can also be used.

To a skilled person in the art, it is obvious that the basic idea of the invention can be implemented in various ways, as technology and materials develop. The invention and its embodiments are therefore not limited to only the examples presented above; rather they may vary within the scope of the claims.

## Claims

1. A hardenable mixture that can be hardened by mixing with water and that comprises as aggregates finely crushed stone and coarsely crushed stone together accounting for 70-81.1% of the mass of the waterless mixture, the hardenable mixture being **characterized** for comprising as binders, listed below with their respective percentage shares of the mass of the waterless mixture,
8-16% of blast-furnace slag ground to a grain size of 0-200 micrometers, and
a maximum of 15% of recycled concrete ground to a grain size of 0-200 micrometers,
and sodium silicate and sodium hydroxide as alkaline activators,
wherein 28.5-100% of said aggregates are comprised of crushed recycled concrete.

2. A hardenable mixture according to claim 1, wherein said sodium silicate is a 39% sodium silicate solution, representing a mass percentage share of 1.0-1.8% or an equivalent amount of sodium silicate.

3. A hardenable mixture according to any of claims 1-2, wherein said sodium hydroxide is a 50% sodium hydroxide solution, representing a mass percentage share of 2.0-2.8% or an equivalent amount of sodium hydroxide.

4. A hardenable mixture according to any of claims 1-3, also comprising recycled stone wool as binder, such recycled stone wool being ground to a grain size of 0-200 micrometers and representing a mass percentage share of no more than 8%.

5. A hardenable mixture according to any of claims 1-4, also comprising fly ash as binder, such fly ash being ground to a grain size of 0-200 micrometers and representing a mass percentage share of no more than 2%.

6. A hardenable mixture according to any of claims 1-5, also comprising cement as binder, such cement representing a mass percentage share of no more than 5%.

7. A hardenable mixture according to any of claims 1-6, also comprising sodium carbonate representing a mass percentage share of no more than 5%.

8. A hardenable mixture according to any of claims 1-7, wherein the binders have been ground to a grain size of 0-150 micrometers.

9. A hardenable mixture according to any of claims 1-7, wherein the binders have been ground to a grain size of 0-100 micrometers.

10. A hardenable mixture according to any of claims 1-9, wherein recycled concrete represents a share of no less than 40% of the total waterless mass of the hardenable mixture.

11. A hardenable mixture according to any of claims 1-9, wherein recycled concrete represents a share of no less than 50% of the total waterless mass of the hardenable mixture.

12. A hardenable mixture according to any of claims 1-9, wherein recycled concrete represents a share of no less than 60% of the total waterless mass of the hardenable mixture.
